# EUROPÄISCHE PATENTSCHRIFT

(11) **EP 2 978 967 B1**
(45) Veröffentlichungstag und Bekanntmachung des Hinweises auf die Patenterteilung: **16.10.2019**
(21) Anmeldenummer: 14712570.2
(22) Anmeldetag: 06.02.2014
(51) Int. Cl.: F03D 1/06

(54) **ROTORBLATT EINER WINDENERGIEANLAGE MIT WINGLET**
ROTOR BLADE OF A WIND TURBINE HAVING A WINGLET
PALE DE ROTOR MUNIE D'UNE PENNE POUR ÉOLIENNE

(30) Priorität: 28.03.2013 DE 202013101386 U
(43) Veröffentlichungstag der Anmeldung: 03.02.2016
(73) Patentinhaber: Rohden, Rolf, 26607 Aurich (DE)
(72) Erfinder: Rohden, Rolf, 26607 Aurich (DE)
(74) Vertreter: Weidner Stern Jeschke
(86) Internationale Anmeldenummer: PCT/DE2014/100042
(87) Internationale Veröffentlichungsnummer: WO 2014/154199

(56) Entgegenhaltungen:
- EP-A1- 0 025 251
- EP-A1- 2 416 005
- WO-A1-2009/098340
- DE-U1- 20 301 445
- US-A1- 2010 260 603

## Beschreibung

Die Erfindung betrifft ein Rotorblatt, insbesondere für eine Windenergieanlage, mit einer Blattwurzel, einer Blattspitze, einer Druckfläche und einer Saugfläche, wobei die Druckfläche und die Saugfläche in einem Anströmbereich miteinander verbunden sind und die Blattspitze ein Abschlusselement, insbesondere ein Winglet, aufweist, und eine Nabe, welche das Rotorblatt aufweist sowie eine Windenergieanlage oder ein Generator mit einer solchen Nabe und einen Windenergieanlagenpark.

Es ist bekannt am Ende eines Rotorblattes oder eines Flugzeugsflügels eine Endscheibe anzubringen. Eine derartige Endscheibe sorgt dafür, dass an dem Blattende günstigere aerodynamische Verhältnisse entstehen, welche dem Flugzeug einen besseren Auftrieb verleiht und die Geräuschentwicklung minimiert. Insbesondere wird der bessere Auftrieb dadurch realisiert, dass Wirbel durch die Endscheibe das Ende eines Blattes verringert werden und stattdessen, dass sich eine Strömung als Wirbel ablöst, wird diese "am Rotorblatt"

DE 203 01 445 U1, WO 2009/098340 A1, EP 2 416 005 A1 und EP 0 025 251 A1 offenbaren Rotorblätter für Windenergieanlagen, die mit Wingletflügel ausgestattet sind.

Nachteilig ist jedoch, dass eine angebrachte Endscheibe aufgrund ihrer der Strömung entgegengesetzten Fläche zu einer höheren Reibung führt. Diese höhere Reibung wirkt dem positiven Effekt des besseren Auftriebs entgegen. Bei Rotorblättern einer Windenergieanlage mindert eine derartige Endscheibe ab einen gewissen Punkt die Energieausbeute.

Aufgabe der Erfindung ist es den Stand der Technik zu verbessern.

Gelöst wird die Aufgabe durch ein Rotorblatt gemäß Anspruch 1, insbesondere für eine Windenergieanlage oder einen Generator, mit einer Blattwurzel, einer Blattspitze, einer Druckfläche und einer Saugfläche, wobei die Druckfläche und die Saugfläche in einem Anströmbereich miteinander verbunden sind und die Blattspitze ein Abschlusselement, insbesondere ein Winglet, aufweist, wobei das Abschlusselement einen ersten Wingletflügel und einen zweiten Wingletflügel aufweist, wobei eine erste Wingletflügellängsachse druckflächenseitig einen Winkel α1 kleiner 180° oder kleiner 150° oder kleiner 120° oder kleiner 90° oder kleiner 60° gegenüber einer ersten Rotorblattlängsachse und eine zweite Wingletflügellängsachse saugflächenseitig einen Winkel β1 kleiner 180° oder kleiner 150° oder kleiner 120° oder kleiner 90° oder kleiner 60° gegenüber einer zweiten Rotorblattlängsachse aufweist, sodass der erste Wingletflügel und der zweite Wingletflügel ein erstes Wingletflügelpaar ausbilden.

Somit kann ein Rotorblatt bereitgestellt werden, welches die aerodynamischen und akustischen Vorteile einer Endscheibe bietet und dabei jedoch einen sehr geringen aerodynamischen Widerstand der anströmenden Luft bietet, sodass insbesondere bei einer Windenergieanlage der Energieertrag optimiert wird. Dies ist insbesondere deshalb der Fall, da die Fläche des Abschlusselements geringer ist als bei Endscheiben des Standes der Technik.

### Folgendes Begriffliche soll gelten:

Bei dem "Rotorblatt" handelt es sich insbesondere um ein Rotorblatt einer Windenergieanlage. Auch ein Flugzeugflügel oder auch ein Turbinenblatt eines Generators ist von dem Begriff Rotorblatt mit umfasst. Allgemein gilt, dass das Rotorblatt eine Saug- und eine Druckfläche aufweist, sodass ein anströmendes Medium dem Rotorblatt eine Energie aufprägt, welche insbesondere für das Antreiben eines Generators, auch Turbine genannt, oder zum Aufprägen eines Auftriebs für ein Flugzeugs geeignet ist.

Sowohl die "Saugfläche" als auch die "Druckfläche" weisen für ein anströmendes Fluid eine unterschiedliche Wölbung auf, sodass der für das Rotorblatt beschriebene Effekt eintritt.

Das Rotorblatt weist eine "Blattwurzel" auf. An dieser Blattwurzel ist insbesondere die Nabe einer Windkraftanlage oder eines Generators oder ein Flugzeugrumpf angeflanscht. Der diametral gegenüber der Blattwurzel liegende Bereich des Rotorblatts wird "Blattspitze" oder auch Tip genannt.

Der "Anströmbereich" ist der Bereich, an dem bei einem Windenergieanlagenrotorblatt der Wind angreift. Bei einem Flugzeug ist dies der Bereich, dem das Flugzeug durch seine Beschleunigung oder seine Fluggeschwindigkeit eine Luftströmung aufprägt und bei einer Wasserturbine (Generator) der Bereich, der beispielsweise durch eine Wasserströmung beaufschlagt wird. Die Medien wie Luft und Wasser werden an diesem Anströmbereich aufgeteilt und fließen entweder über die Saugfläche oder über die Druckfläche ab.

Das "Abschlusselement" wird insbesondere auch Winglet genannt. Abschlusselemente gemäß dem Stand der Technik sind insbesondere einfache Endscheiben, welche eingangs beschriebene Vor- und Nachteile aufweisen.

Ein "Wingletflügel" ist nicht lediglich eine Endscheibe, sondern ist zusätzlich dadurch charakterisiert, dass weitere (flügelmäßige) Ausstülpungen vorhanden sind. Durch die (gewinkelte) Anordnung der Wingletflügel zur Druck- oder Saugseite kann insbesondere das aerodynamische Verhalten, die Geräuschentwicklung und die Reibung des Rotorblatts beeinflusst werden. Dies ist insbesondere für Windkraftanlagen an Land wichtig, welche in einem Hörweitenbereich zu menschlichen Behausungen liegen.

Eine "Rotorblattlängsachse" ist eine (gedachte) Systemachse, welche die Bezüge klar definiert. Sie ist insbesondere dadurch gekennzeichnet, dass sie durch den kürzesten Abstand eines Wingletwurzelmittelpunktes zu der Rotorblattwurzelfläche gebildet wird. Die Rotorblattwurzelfläche entspricht insbesondere einer (gedachten) Blattwurzelschnittfläche, welche einen minimalen Flächeninhalt einnimmt. Mithin entspricht die Blattwurzelschnittfläche einem Rotorblattprofil an der Blattwurzel.

In einem einfachen Fall kann die Rotorblattlängsachse mit der sogenannte Pitchachse, welche durch den Pitchachsenmittelpunkt in der Wurzel des Rotorblattes und der Rotorblattspitze geführt ist, gleichgesetzt werden.

Die "Wingletflügellängsachse" entspricht einer Längssystemachse des jeweiligen Wingletflügels. Würde eine Pitchachse für einen derartigen Wingletflügel definiert werden, entspräche diese Wingletflügelpitchache in einem einfachen Fall der Wingletflügellängsachse. Im Falle, dass der Wingletflügel eine Spitze aufweist, führt die Wingletflügellängsachse durch diese Spitze. Somit führt die Wingletflügellängsachse immer durch den äußersten Punkt des Wingletflügels. Ist das Ende des Wingletflügels als Kante oder Fläche ausgebildet, führt die Wingletflügellängsachse durch den Wingletflügelkantenmittelpunkt oder durch den Wingletflügelflächenmittelpunkt. Weist eine Wingletfügelfläche mehrere Mittelpunkte oder keinen Mittelpunkt auf, entspricht der Wingletflügelmittelpunkt einem gewichteten Mittelpunkt.

Für den "Wingletwurzelmittelpunktes" kann über eine Wingletflügelwurzelfläche und dem zugehörigen Mittelpunkt bestimmt werden. Die Wingletwurzelflügelfläche wird analog zur Rotorblattwurzelfläche und der Mittelpunkt der Wingletflügelwurzelfläche entsprechend der Mittelpunktsbestimmung im vorherigen Absatz bestimmt.

Die zugehörigen Winkel werden insbesondere aus einer Anströmrichtungssicht bestimmt. Bei vorgespannten Rotorblättern wird die Rotorblattlängsachse für den "entspannten" Fall bestimmt.

Bevorzugt ist sowohl der Winkel α1 als auch der Winkel β1 jeweils 90°. Bei einem Winkel von 90° bildet die Rotorblattlängsachse und die zugehörige Wingletflügellängsachse ein stilisiertes "L" aus. Zudem werden optimale Ergebnisse für einen Winkelbereich von 80° bis 100° für α1 und β1 erzielt.

Von "druckflächenseitig" wird vorliegend dann gesprochen, wenn der Wingletflügel im Wesentlichen über (einen Teil) der Druckfläche hinausragt. Umgekehrt wird von einem "saugseitigen" Wingletflügel dann gesprochen, wenn der Wingletflügel über (einen Teil) der Saugseite hinausragt.

Insbesondere kann eine Sehnenlänge eines Wingletflügelwurzelprofils kleiner 70%. kleiner 60%, kleiner 50%, kleiner 40% oder kleiner 30% einer Sehnenlänge eines letzten Rotorblattprofils entsprechen. Dies kann für sämtliche hier im Text genannte Wingletflügel gelten.

In einer bevorzugten Ausführungsform gemäß Anspruch 1 weist das Abschlusselement einen dritten Wingletflügel und einen vierten Wingletflügel auf, welche ein zweites Wingletflügelpaar ausbilden und eine dritte Wingletflügellängsachse druckflächenseitig einen Winkel α2 kleiner 180° oder kleiner 150° oder kleiner 120° oder kleiner 90° oder kleiner 60° gegenüber einer dritten Rotorblattlängsachse und einer vierten Wingletflügellängsachse saugflächenseitig einen Winkel β2 kleiner 180° oder kleiner 150° oder kleiner 120° oder kleiner 90° oder kleiner 60° gegenüber einer vierten Rotorblattlängsachse aufweisen.

Durch das Verwenden eines weiteren Wingletflügelpaars oder auch nur eines weiteren Wingletflügels werden die aerodynamischen und akustischen Vorteile einer Endscheibe ausgenutzt oder gewährleistet und zugleich die Reibung durch das Abschlusselement (modifizierte Endscheibe) verringert.

Durch die vorliegende Ausführungsform kann mithin eine "geschlitzte" Endscheibe bereitgestellt werden. Durch die geringere Fläche des Abschlusselements wird die Reibung gegenüber Endscheiben des Standes der Technik verringert.

Die Ausführungen zu den Wingletflügeln und den einzelnen Winkeln zu den Rotorblattlängsachsen gelten analog, wobei vorliegend die Rotorblattlängsachsen jeweils sich mit den hier infrage stehenden Wingletflügellängsachsen schneiden (dies gilt auch für alle anderen vorliegend erwähnten Wingletflügellängsachsen und Rotorblattlängsachsen).

Um die Geräuschentwicklung noch weiter zu reduzieren und/oder die aerodynamischen und akustischen Eigenschaften und die Reibungswerte des Rotorblattes noch zu verbessern, kann das Abschlusselement einen fünften Wingletflügel und einen sechsten Wingletflügel aufweisen, welche ein drittes Wingletflügelpaar ausbilden und eine fünfte Wingletflügellängsachse druckflächenseitig einen Winkel α3 kleiner 180° oder kleiner 150° oder kleiner 120° oder kleiner 90° oder kleiner 60° gegenüber einer fünften Rotorblattlängsachse und eine sechste Wingletflügellängsachse saugflächenseitig einen Winkel β3 kleiner 180° oder kleiner 150° oder kleiner 120° oder kleiner 90° oder kleiner 60° gegenüber einer sechsten Rotorblattlängsachse aufweisen.

Auch hier gelten die Ausführungen zu den Winkeln, den Bezügen, den Wingletflügellängsachsen und den Rotorblattlängsachsen analog.

In einer weiteren Ausführungsform weist das Abschlusselement ein viertes und/oder ein fünftes Wingletflügelpaar und/oder weitere Wingletflügelpaare auf, welche jeweils zwei Wingletfügel aufweisen, wobei jeweils zugehörigen Wingletflügellängsachsen durckflächenseitig einen Winkel an oder saugflächenseitig einen Winkel βn kleiner 180° oder kleiner 150° oder kleiner 120° oder kleiner 90° oder kleiner 60° gegenüber jeder zugehörigen Rotorblattlängsachse aufweisen.

Durch die Vielzahl der Wingletflügelpaare können immer feiner die aerodynamischen und akustischen Eigenschaften und die Reibungswerte des Rotorblatts verbessert werden.

An dieser Stelle sein noch einmal ausgeführt, dass sich die jeweilige Rotorblattlängsachse immer auf den zugehörigen Wingletflügel bezieht und dass sich die Wingletflügelsystemachse, welche vorliegend jeweils Wingletflügellängsachse genannt wird, sich mit der Rotorblattsystemachse, welche vorliegend Rotorblattlängsachse genannt wird, schneidet und der Winkel aus der Sicht einer Anströmrichtung zu ermitteln ist.

Um die einzelnen Wingletflügel zu optimieren, kann ein Wingletflügel oder können mehrere oder können sämtliche Wingletflügel eine Wingletflügelsaugfläche und/oder eine Wingletflügeldruckfläche aufweisen, welche in einem Anströmbereich miteinander verbunden sind. Somit kann zum einen eine etwaige Energieausbeute bei einer Windenergieanlage oder bei einem Generator erhöht werden und zum anderen kann somit nochmals die Reibung an den Wingletflügeln vermindert werden.

Um insbesondere mehrere hintereinanderliegende Wingletflügel optimal anströmen zu können, kann ein Wingletflügel und/oder können mehrere Wingletflügel eine Wölbung aufweisen. Diese Wölbung kann insbesondere dadurch erreicht werden, dass entlang der Wingletflügellängsachse der Wingletflügel gebogen ist.

In einer diesbezüglichen Ausführungsform weist ein Wingletflügelpaar einen konvexgewölbten und einen konkavgewölbten Wingletfügel auf. In einer Anströmansicht haben in diesem Fall die Wingletflügelpaare die Form eines stilisierten S's.

Insbesondere in dieser Ausgestaltungsform hat sich überraschenderweise gezeigt, dass damit noch einmal eine erhebliche Reduktion der Reibung bei reduzierter Geräuschentwicklung erreicht werden kann.

Um die Auftriebseigenschaften der einzelnen Wingletflügel noch besser nutzen zu können, können die jeweiligen Winkel α und die jeweiligen Winkel β jeweils unterschiedliche Werte aufweisen. Somit kann insbesondere jeder Wingletflügel über seine gesamte Flügelfläche "in den Wind" gestellt werden.

Um in Anströmrichtung negative Effekte der abströmenden Luft für die dahinter gelagerten Wingletflügel zu minimieren, können in einer Anströmrichtung die einzelnen Wingletflügelpaare einen Flügelabstand aufweisen.

In einer weiteren Ausführungsform weist das Abschlusselement eine Endscheibe, insbesondere eine elliptisch-förmige Endscheibe, auf, an welcher die jeweiligen Wingletflügel angeordnet sind.

Somit kann zumindest für die überragende Fläche der Endscheibe ein vollständiger Endscheibeneffekt ausgenutzt werden. Auch dies kann die aerodynamischen und akustischen Eigenschaften des Rotorblattes verbessern.

Weiterhin hat sich überraschend herausgestellt, dass, wenn zwei Wingletflügel eines Wingletflügelpaares asymmetrische Saug- und Druckflächenprofile aufweisen, die Leistungsausbeute einer Windenergieanlage/eines Generators erhöht werden kann. Somit können die Wingletflügel eines Wingletflügelpaars insbesondere unterschiedliche Flügellängen aufweisen. Insbesondere ist der druckseitige Wingletflügel länger als der saugseitige Wingletflügel.

In einer weiteren Ausführungsform können zwei Wingletflügel asymmetrische Saug- und/oder Druckflügelprofile aufweisen. Auch hier war vorliegend nicht absehbar, dass dadurch die Eigenschaften des Rotorblatts verbessert werden können.

In einer weiteren Ausführungsform ist das Rotorblatt als Teleskoprotorblatt ausgestaltet, welches durch das Abschlusselement in einem eingefahrenen Zustand das Teleskoprotorblatt verschließt.

Somit kann das Endsegment eines Teleskoprotorblatts vollständig in dem Anfangssegmenten des Teleskoprotorblatts verstaut werden und es wird ein optimaler Verschluss durch das Abschlusselement gewährleistet. Dafür können beispielsweise zusätzlich am Wingletflügel etwaige Dichtungselemente wie Dichtungsgummi etc. angebracht sein. Dies ist insbesondere dadurch vorteilhaft, da vorliegend in das verschlossene Teleskoprotorblatt kein Wasser oder dergleichen eindringen kann, welches oder welche innenliegende Bauteile angreift oder beschädigt.

In einem weiteren Aspekt der Erfindung wird die Aufgabe gelöst durch eine Nabe, welche ein zuvor beschriebenes Rotorblatt aufweist.

Eine derartige Nabe kann beispielsweise für Generatoren für Wasserkraft oder für Windenergieanlagen eingesetzt werden.

In einem weiteren Aspekt wird der Stand der Technik verbessert durch eine Windenergieanlage oder einem Generator welche oder welcher eine zuvor beschriebene Nabe aufweist.

Somit können Windenergieanlagen und/oder Generatoren bereitgestellt werden, welche eine höhere Effizienz gegenüber bisher eingesetzten Naben mit entsprechenden Rotorblättern realisieren.

In einem weiteren Aspekt wird die Aufgabe gelöst durch einen Windenergieanlagenpark, welcher eine zuvor beschriebene Windenergieanlage aufweist. Insbesondere dadurch, dass das Winglet die aerodynamischen Eigenschaften eines Rotorblattes stark beeinflusst, können Windparks anders ausgerichtet werden beziehungsweise dichter gestellt werden, da Verwirbelungen am Ende der Rotorblätter verringert werden.

Im Weiteren wird die Erfindung anhand von Ausführungsbeispielen erläutert. Es zeigen
- Figur 1a.): eine schematische Darstellung eines Teleskoprotorblatts in einer Seitenansicht aus Richtung einer Anströmung,
- Figur 1b.): eine stark schematische Darstellung eines Winglets in einer Aufsicht von oben
- Figur 2: ebenfalls eine schematische Darstellung eines alternativen Winglets in einer Ansicht von oben
- Figur 3: eine stark schematische Darstellung einer Saugseitenansicht eines Rotorblattendes mit einem angeflanschten Winglet,
- Figur 4: eine stark schematische Darstellung einer Druckseitenansicht eines Rotorblattendes mit einem angeflanschten Winglet und
- Figur 5: eine schematische Perspektivdarstellung eines Teleskoprotorblatts mit einem Winglet, wobei das Teleskoprotorblatt an einer Nabe eines Maschinenhauses einer Windenergieanlage angeflanscht ist.

Ein Teleskoprotorblatt 101 weist ein erstes Segment 103 und ein zweites Segment 105 auf, wobei das zweite Segment 105 in das erste Segment 103 verschiebbar ist. Das erste Segment 103 weist eine Blattwurzel 109 mit einem Blattwurzelmittelpunkt 111 auf. Über diese Blattwurzel 109 wird das Rotorblatt an eine Nabe einer Windenergieanlage angeflanscht. Die Pitchachse (nicht dargestellt) führt durch den Blattwurzelmittelpunkt 111.

An dem Ende (Blattspitze 107) des zweiten Segments 105 ist ein Winglet 121 angeordnet. Das Teleskoprotorblatt 101 weist sowohl eine Saugseite 119 als auch eine Druckseite 117 auf.

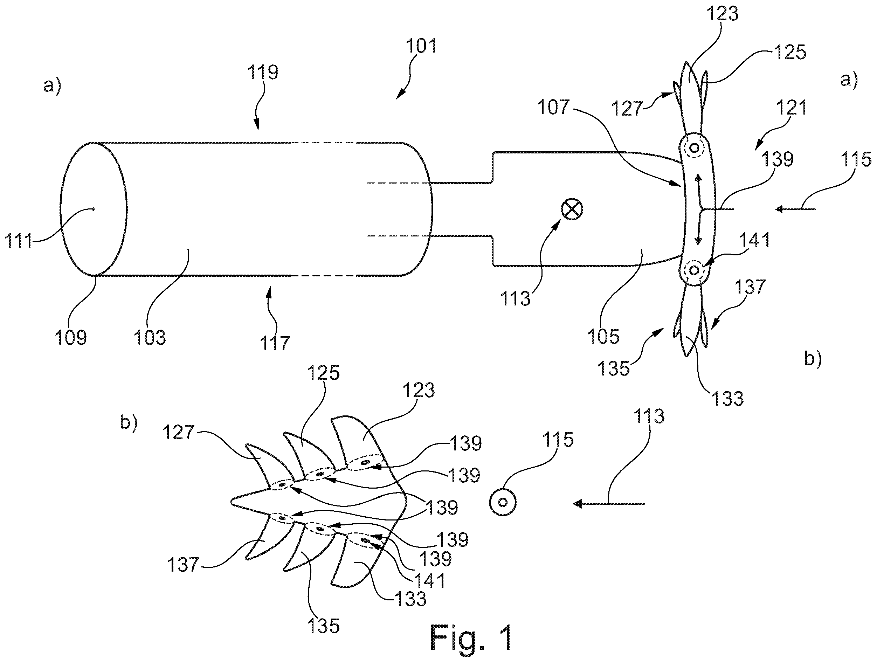

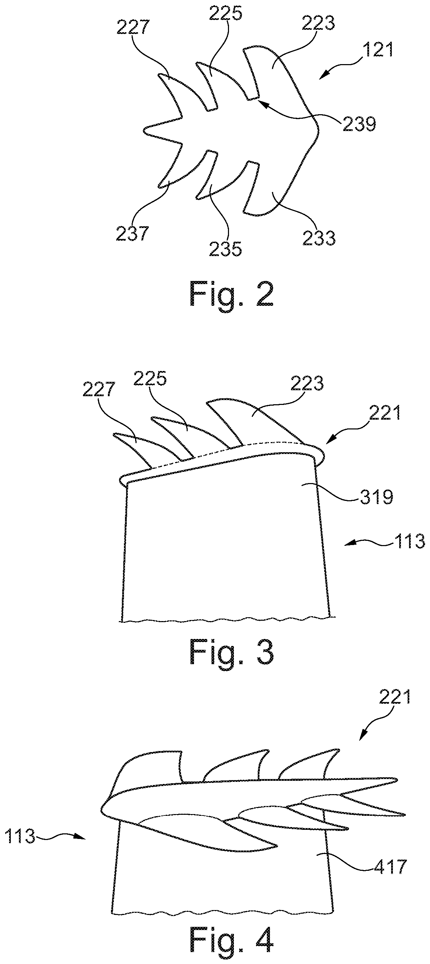

An dem Winglet 121 sind sechs Wingletflügel 123, 125, 127, 133, 135, 137 angeordnet. Jeder dieser Wingletflügel 123, 125, 127, 133, 135, 137 weist eine Wingletflügelwurzel 139 auf. Zudem weist jeder der Wingletflügel 123, 125, 127, 133, 135, 137 einen Wingletflügelwurzelmittelpunkt auf, welcher exemplarisch für den ersten druckseitigen Wingletflügel 133 dargestellt ist. Das Bezugszeichen für den ersten Wingletflügelwurzelmittelpunkt des ersten druckseitigen Wingletflügels 133 lautet 141. Das an der Blattspitze 107 angeordnete Winglet 121 ist sowohl das Winglet aus der Figur 1b als auch alternativ das Winglet 221 aus der Figur 2.

Im Gegensatz zu dem Winglet der Figur 1 weist das Winglet 221 der Figur 2 unterschiedliche Wingletflügelformen auf. So ist das erste Wingletflügelpaar, welches durch die Wingletflügel 223 und 233 gebildet wird der Silhouette einer Möwe ähnlich, während die rückwärtig gelegenen Wingletflügelpaar, welches durch die Wingletflügel 227, 237 gebildet wird eher einer doppelten Haifischflosse ähnelt. Zudem weisen die Wingletflügel 223, 225, 227, 233, 235, 237 des Winglets 221 unterschiedliche Längen auf und sind unterschiedlich konvex beziehungsweise konkav gewölbt (siehe Figur 4).

Das Teleskoprotorblatt 101 weist eine erste Rotorblattlängsachse (nicht dargestellt) auf, welche den Blattwurzelmittelpunkt 111 und den druckseitigen Wingletflügelwurzelmittelpunkt 141 des druckseitigen Wingletflügels 133 auf. Vorliegend sei angenommen, dass dies die kürzeste Verbindung des Blattwurzelmittelpunkts 111 und des Wingletflügelwurzelmittelpunkts 141 des ersten druckseitigen Wingletflügels 133 ist. Eine Wingletflügellängsachse (nicht dargestellt) ist die kürzeste Verbindung des Wingletflügelwurzelmittelpunkts 141 des ersten druckseitigen Wingletflügels 133 durch die Wingletflügelblattspitze (nicht dargestellt). Der sich zwischen der Rotorblattlängsachse und der schneidenden Wingletflügellängsachse ausbildende Winkel sei α1. Dieser Winkel beträgt vorliegend 90°.

Analog werden so die einzelnen Winkel α und β für die einzelnen Wingletflügelanordnung in Bezug zu dem Rotorblatt 101 bestimmt. Vorliegend sind die Werte der jeweiligen Winkel 88°, 90° und 92°, wobei 90° einen rechten Winkel darstellt.

Strömt nun eine Luftmasse zum Beispiel aufgrund eines Windes das Teleskoprotorblatt 101 in Anströmrichtung 113 an, wird die Luft über die Saugfläche 119 und die Druckfläche 117 abgeleitet. Da vorliegend das Rotorblatt an eine Windenergieanlage angeflanscht ist, prägt mithin diese bewegte Luftmasse einer Nabe eine Rotation auf, welche von einem Generator in elektrische Energie umgewandelt wird.

Zwar stellt in diesem Fall das Winglet 121 oder entsprechend 221 der bewegten Luftmasse einen Widerstand entgegen, dennoch verhindert das Winglet 121, 221 Verwirbelungen an der Blattspitze 107. Durch die einzelnen Wingletflügel 123, 125, 127, 133, 135, 137, 223, 225, 227, 233, 235, 237 wird ebenfalls die anströmende Luft über die jeweilige Drucksaugfläche der einzelnen Wingletflügel 123, 125, 127, 133, 135, 137, 223, 225, 227, 233, 235, 237 abgeleitet und erhöht die in das System der Windenergieanlage eingebrachte Energie.

Das beschriebene Teleskoprotorblatt 101 ist dreifach an einer Nabe 561 einer Windenergieanlage mit einem Maschinenhaus 563 angeflanscht. Dabei kann das Rotorblatt 101 "gepitscht" werden, sprich der Anstellwinkel ist einstellbar.

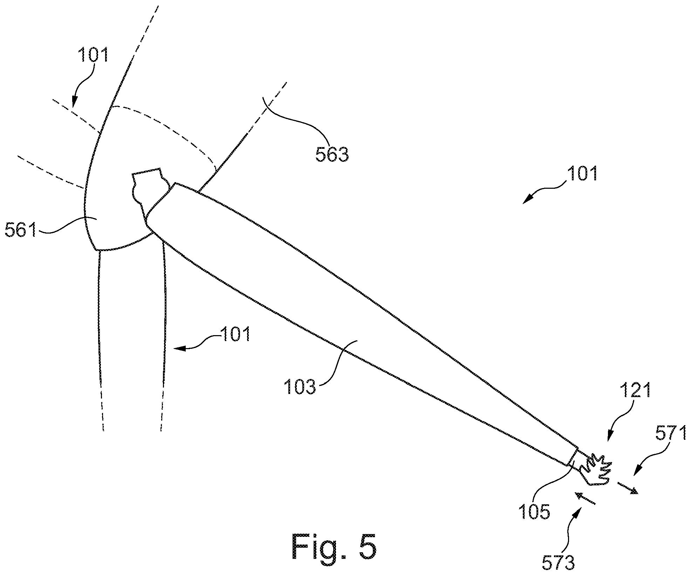

Das zweite Segment 105 des Rotorblatts 101 kann in eine Ausfahrstellung und in eine Geschlossenstellung verschoben werden. In der Fig. 5 ist das Rotorblatt 101 in einer Zwischenstellung dargestellt. Wird das zweite Segment 105 gegenüber dem ersten Segment 103 in Ausfahrrichtung 571 verschoben, wird am Ende die Ausfahrstellung erreicht. Wird das zweite Segment 105 gegenüber dem ersten Segment 103 in Einfahrrichtung 573 verschoben, wird am Ende die Geschlossenstellung erreicht.

Das Winglet 121 am Ende des zweiten Segments 105 weist an einer Unterfläche ein elastisches Material auf, welches in der Geschlossenstellung das erste Segment 103 derart abdichtet, dass in das erste Segment 103 an der Schnittstelle zwischen dem ersten Segment 103 und dem zweiten Segment 105 kein Wasser eindringt.

### Bezugszeichenliste

- 101: Teleskoprotorblatt
- 103: erstes Segment
- 105: zweites Segment
- 107: Blattspitze/Tip
- 109: Blattwurzel
- 111: Blattwurzelmittelpunkt
- 113: Anströmrichtung
- 115: Blickrichtung auf das Winglet
- 117: Druckseite des Rotorblatts
- 119: Saugseite des Rotorblatts
- 121: Winglet
- 123: erster saugseitiger Wingletflügel
- 125: zweiter saugseitiger Wingletflügel
- 127: dritter saugseitiger Wingletflügel
- 133: erster druckseitiger Wingletflügel
- 135: zweiter druckseitiger Wingletflügel
- 137: dritter druckseitiger Wingletflügel
- 139: Wingletflügelwurzel
- 141: Wingletflügelwurzelmittelpunkt des ersten druckseitigen Wingletflügels 133
- 221: Winglet
- 223: erster saugseitiger Wingletflügel
- 225: zweiter saugseitiger Wingletflügel
- 227: dritter saugseitiger Wingletflügel
- 233: erster druckseitiger Wingletflügel
- 235: zweiter druckseitiger Wingletflügel
- 237: dritter druckseitiger Wingletflügel
- 239: Flügelabstand
- 319: Saugseitenansicht eines Teilrotorblatts mit Blattspitze
- 417: Druckseitenansicht eines Teilrotorblatts mit Blattspitze
- 561: Nabe
- 563: Maschinenhaus einer Windenergieanlage
- 571: Ausfahrrichtung
- 573: Einfahrrichtung

## Patentansprüche

1. Rotorblatt (101) mit einer Blattwurzel (109), einer Blattspitze (107), einer Druckfläche (117) und einer Saugfläche (119), wobei die Druckfläche (117) und die Saugfläche (119) in einem Anströmbereich miteinander verbunden sind und die Blattspitze (107) ein Abschlusselement (121, 221) aufweist, wobei das Abschlusselement einen ersten Wingletflügel (123, 223) und einen zweiten Wingletflügel (133, 233) aufweist, wobei eine erste Wingletflügellängsachse druckflächenseitig einen Winkel α1 kleiner 180° oder kleiner 150° oder kleiner 120° oder kleiner 90° oder kleiner 60° gegenüber einer ersten Rotorblattlängsachse und eine zweite Wingletflügellängsachse saugflächenseitig einen Winkel β1 kleiner 180° oder kleiner 150° oder kleiner 120° oder kleiner 90° oder kleiner 60° gegenüber einer zweiten Rotorblattlängsachse aufweist, sodass der erste (123, 223) Wingletflügel und der zweite Wingletflügel (133, 233) ein erstes Wingletflügelpaar ausbilden, **dadurch gekennzeichnet, dass** das Abschlusselement (121, 221) einen dritten Wingletflügel (125, 225) und einen vierten Wingletflügel (135, 235) aufweist, welche ein zweites Wingletflügelpaar ausbilden, und eine dritte Wingletflügellängsachse druckflächenseitig einen Winkel α2 kleiner 180° oder kleiner 150° oder kleiner 120° oder kleiner 90° oder kleiner 60° gegenüber einer dritten Rotorblattlängsachse und eine vierte Wingletflügellängsachse saugflächenseitig einen Winkel β2 kleiner 180° oder kleiner 150° oder kleiner 120° oder kleiner 90° oder kleiner 60° gegenüber einer vierten Rotorblattlängsachse aufweist.

2. Rotorblatt (101) nach einem der vorherigen Ansprüche, **dadurch gekennzeichnet, dass** das Abschlusselement (121, 221 einen fünften Wingletflügel (127, 227) und einen sechsten Wingletflügel (137, 237) aufweist, welche ein drittes Wingletflügelpaar ausbilden, und eine fünfte Wingletflügellängsachse druckflächenseitig einen Winkel α3 kleiner 180° oder kleiner 150° oder kleiner 120° oder kleiner 90° oder kleiner 60° gegenüber einer fünften Rotorblattlängsachse und eine sechste Wingletflügellängsachse saugflächenseitig einen Winkel β3 kleiner 180° oder kleiner 150° oder kleiner 120° oder kleiner 90° oder kleiner 60° gegenüber einer sechsten Rotorblattlängsachse aufweist.

3. Rotorblatt (101) nach einem der vorherigen Ansprüche, **dadurch gekennzeichnet, dass** das Abschlusselement (121, 221) ein viertes und/oder ein fünftes Wingletflügelpaar und/oder weitere Wingletflügelpaare aufweist, welche jeweils zwei Wingletflügel aufweisen, wobei jeweils zugehörige Wingletflügellängsachsen druckflächenseitig einen Winkel αn oder saugflächenseitig einen Winkel βn kleiner 180° oder kleiner 150° oder kleiner 120° oder kleiner 90° oder kleiner 60° gegenüber jeder zugehörigen Rotorblattlängsachse aufweisen.

4. Rotorblatt (101) nach einem der vorherigen Ansprüche, **dadurch gekennzeichnet, dass** ein Wingletflügel oder mehrere oder sämtliche Wingletflügel (123, 125, 127, 133, 135, 137, 223, 225, 227, 233, 235, 237) eine Wingletflügelsaugfläche und/oder eine Wingletflügeldruckfläche aufweisen, welche in einem Anströmbereich miteinander verbunden sind.

5. Rotorblatt nach einem der vorherigen Ansprüche, **dadurch gekennzeichnet, dass** ein Wingletflügel und/oder das mehrere Wingletflügel (123, 125, 127, 133, 135, 137, 223, 225, 227, 233, 235, 237) eine Wölbung entlang der jeweiligen Wingletflügellängsachse aufweist oder aufweisen.

6. Rotorblatt nach Anspruch 5, **dadurch gekennzeichnet, dass** ein Wingletflügelpaar einen konvex gewölbten und einen konkav gewölbten Wingletflügel aufweist.

7. Rotorblatt nach einem der vorherigen Ansprüche, **dadurch gekennzeichnet, dass** die jeweiligen Winkel α und die jeweiligen Winkel β jeweils unterschiedliche Werte aufweisen.

8. Rotorblatt nach einem der vorherigen Ansprüche, **dadurch gekennzeichnet, dass** in einer Anströmrichtung die einzelnen Wingletflügelpaare einen Flügelabstand (239) aufweisen.

9. Rotorblatt nach einem der vorherigen Ansprüche, **dadurch gekennzeichnet, dass** das Abschlusselement (121, 221 eine Endscheibe, insbesondere elliptischförmige Endscheibe, aufweist, an welcher die jeweiligen Wingletflügel angeordnet sind.

10. Rotorblatt nach einem der vorherigen Ansprüche, **dadurch gekennzeichnet, dass** zwei Wingletflügel eine unterschiedliche Wingletflügelform aufweisen.

11. Rotorblatt nach einem der vorherigen Ansprüche, **dadurch gekennzeichnet, dass** zwei Wingletflügel asymmetrische Saug- und/oder Druckflügelprofile aufweisen.

12. Nabe (561), an welcher ein Rotorblatt (101) nach einem der vorherigen Ansprüche angeordnet ist.

13. Windenergieanlage oder Generator, welche oder welcher eine Nabe (561) nach Anspruch 12 aufweist.

14. Windenergieanlagenpark, welcher eine Windenergieanlage nach Anspruch 13 aufweist.

## Claims

1. A rotor blade (101) with a blade root (109), a blade tip (107), a pressure surface (117) and a suction surface (119), wherein the pressure surface (117) and the suction surface (119) are joined together in the area of an incoming flow and the blade tip (107) comprises an end element (121, 221), wherein the end element comprises a first winglet fin (123, 223) and a second winglet fin (133, 233), wherein, on its pressure surface side, a first winglet fin longitudinal axis has an angle α1 of less than 180° or less than 150° or less than 120° or less than 90° or less than 60° relative to a first rotor blade longitudinal axis and, on its suction surface side, a second winglet fin longitudinal axis has an angle β1 of less than 180° or less than 150° or less than 120° or less than 90° or less than 60° relative to a second rotor blade longitudinal axis, so that the first winglet fin (123, 223) and the second winglet fin (133, 233) form a first winglet fin pair, **characterized in that** the end element (121, 221) comprises a third winglet fin (125, 225) and a fourth winglet fin (135, 235), which form a second winglet fin pair, and, on its pressure surface side, a third winglet fin longitudinal axis has an angle α2 of less than 180° or less than 150° or less than 120° or less than 90° or less than 60° relative to a third rotor blade longitudinal axis and, on its suction surface side, a fourth winglet fin longitudinal axis has an angle β2 of less than 180° or less than 150° or less than 120° or less than 90° or less than 60° relative to a fourth rotor blade longitudinal axis.

2. The rotor blade (101) according to one of the afore-mentioned claims, **characterized in that** the end element (121, 221) comprises a fifth winglet fin (127, 227) and a sixth winglet fin (137, 237), which form a third winglet fin pair, and, on its pressure surface side, a fifth winglet fin longitudinal axis has an angle α3 of less than 180° or less than 150° or less than 120° or less than 90° or less than 60° relative to a fifth rotor blade longitudinal axis and, on its suction surface side, a sixth winglet fin longitudinal axis has an angle β3 of less than 180° or less than 150° or less than 120° or less than 90° or less than 60° relative to a sixth rotor blade longitudinal axis.

3. The rotor blade (101) according to one of the afore-mentioned claims, **characterized in that** the end element (121, 221) comprises a fourth and/or a fifth winglet fin pair and/or additional winglet fin pairs, which respectively comprise two winglet fins, wherein respectively associated winglet fin longitudinal axes have an angle αn, on their pressure surface side, or an angle βn, on their suction surface side, of less than 180° or less than 150° or less than 120° or less than 90° or less than 60° relative to each associated rotor blade longitudinal axis.

4. The rotor blade (101) according to one of the afore-mentioned claims, **characterized in that** a winglet fin or several or all winglet fins (123, 125, 127, 133, 135, 137, 223, 225, 227, 233, 235, 237) have a winglet fin suction surface and/or a winglet fin pressure surface, which are joined together in the area of an incoming flow.

5. The rotor blade according to one of the afore-mentioned claims, **characterized in that** a winglet fin and/or several winglet fins (123, 125, 127, 133, 135, 137, 223, 225, 227, 233, 235, 237) has or have a curvature along the respective winglet fin longitudinal axis.

6. The rotor blade according to claim 5, **characterized in that** a winglet fin pair comprises a convex winglet fin and a concave winglet fin.

7. The rotor blade according to one of the afore-mentioned claims, **characterized in that** the respective angles α and the respective angles β respectively have different values.

8. The rotor blade according to one of the afore-mentioned claims, **characterized in that** the individual winglet fin pairs have a winglet fin spacing (239) in an inflow direction.

9. The rotor blade according to one of the afore-mentioned claims, **characterized in that** the end element (121, 221) comprises an end plate, in particular an elliptical end plate, on which the respective winglet fins are disposed.

10. The rotor blade according to one of the afore-mentioned claims, **characterized in that** two winglet fins have a different winglet fin shape.

11. The rotor blade according to one of the afore-mentioned claims, **characterized in that** two winglet fins have asymmetrical suction and/or pressure blade profiles.

12. A hub (561) on which a rotor blade (101) according to one of the afore-mentioned claims is disposed.

13. A wind turbine or generator, which comprises a hub (561) according to claim 12.

14. A wind farm, which comprises a wind turbine according to claim 13.

## Revendications

1. Pale de rotor (101) avec un pied de pale (109), une pointe de pale (107), un intrados (117) et un extrados (119), où l'intrados (117) et l'extrados (119) sont joints dans une zone d'attaque de l'air et la pointe de pale (107) comporte un élément d'extrémité (121, 221), où l'élément d'extrémité comporte une première ailette de winglet (123, 223) et une deuxième ailette de winglet (133, 233), où un premier axe longitudinal d'ailette de winglet présente, côté intrados, un angle α1 inférieur à 180° ou inférieur à 150° ou inférieur à 120° ou inférieur à 90° ou inférieur à 60° par rapport à un premier axe longitudinal de pale de rotor et un second axe longitudinal d'ailette de winglet présente, côté extrados, un angle β1 inférieur à 180° ou inférieur à 150° ou inférieur à 120° ou inférieur à 90° ou inférieur à 60° par rapport à un deuxième axe longitudinal de pale de rotor, de sorte que la première ailette de winglet (123, 223) et la seconde ailette de winglet (133, 233) forment une première paire d'ailettes de winglet, **caractérisée en ce que** l'élément d'extrémité (121, 221) comporte une troisième ailette de winglet (125, 225) et une quatrième ailette de winglet (135, 235) qui forment une deuxième paire d'ailettes de winglet et un troisième axe longitudinal d'ailette de winglet présente, côté intrados, un angle α2 inférieur à 180° ou inférieur à 150° ou inférieur à 120° ou inférieur à 90° ou inférieur à 60° par rapport à un troisième axe longitudinal de pale de rotor et un quatrième axe longitudinal d'ailette de winglet présente, côté intrados, un angle β2 inférieur à 180° ou inférieur à 150° ou inférieur à 120° ou inférieur à 90° ou inférieur à 60° par rapport à un quatrième axe longitudinal de pale de rotor.

2. Pale de rotor (101) selon l'une des revendications précédentes, **caractérisée en ce que** l'élément d'extrémité (121, 221) comporte une cinquième ailette de winglet (127, 227) et une sixième ailette de winglet (137, 237) qui forment une troisième paire d'ailettes de winglet, et un cinquième axe longitudinal d'ailette de winglet présente, côté intrados, un angle α3 inférieur à 180° ou inférieur à 150° ou inférieur à 120° ou inférieur à 90° ou inférieur à 60° par rapport à un cinquième axe longitudinal de pale de rotor et un sixième axe longitudinal d'ailette de winglet présente, côté extrados, un angle β3 inférieur à 180° ou inférieur à 150° ou inférieur à 120° ou inférieur à 90° ou inférieur à 60° par rapport à un sixième axe longitudinal de pale de rotor.

3. Pale de rotor (101) selon l'une des revendications précédentes, **caractérisée en ce que** l'élément d'extrémité (121, 221) comporte une quatrième et/ou une cinquième paire d'ailettes de winglet et/ou d'autres paires d'ailettes de winglet qui comportent respectivement deux ailettes de winglet, où des axes longitudinaux d'ailette de winglet correspondants présentent, côtés intrados, un angle αn ou, côté extrados, un angle βn inférieur à 180° ou inférieur à 150° ou inférieur à 120° ou inférieur à 90° ou inférieur à 60° par rapport à chaque axe longitudinal de pale de rotor correspondant.

4. Pale de rotor (101) selon l'une des revendications précédentes, **caractérisée en ce qu'une** ailette de winglet ou plusieurs ou toutes les ailettes de winglet (123, 125, 127, 133, 135, 137, 223, 225, 227, 233, 235, 237) comportent un extrados d'ailette de winglet et/ou un intrados d'ailette de winglet qui sont joints dans une zone d'attaque de l'air.

5. Pale de rotor selon l'une des revendications précédentes, **caractérisée en ce qu'une** ailette de winglet et/ou plusieurs ailettes de winglet (123, 125, 127, 133, 135, 137, 223, 225, 227, 233, 235, 237) présente ou présentent une courbure le long de l'axe longitudinal d'ailette de winglet respectif.

6. Pale de rotor selon la revendication 5, **caractérisée en ce qu'une** paire d'ailettes de winglet comporte une ailette de winglet convexe et une ailette de winglet concave.

7. Pale de rotor selon l'une des revendications précédentes, **caractérisée en ce que** les angles α respectifs et les angles β respectifs présentent des valeurs respectivement différentes.

8. Pale de rotor selon l'une des revendications précédentes, **caractérisée en ce que** les paires d'ailette de winglet présentent chacune un espacement d'ailettes (239).

9. Pale de rotor selon l'une des revendications précédentes, **caractérisée en ce que** l'élément d'extrémité (121, 221) comporte une plaque d'extrémité, en particulier une plaque d'extrémité elliptique, au niveau de laquelle sont disposées les ailettes de winglet respectives.

10. Pale de rotor selon l'une des revendications précédentes, **caractérisée en ce que** deux ailettes de winglet présentent une forme d'ailette de winglet différente.

11. Pale de rotor selon l'une des revendications précédentes, **caractérisée en ce que** deux ailettes de winglet ont des profils d'extrados et/ou d'intrados asymétriques.

12. Moyeu (561) sur lequel est disposée une pale de rotor (101) selon l'une des revendications précédentes.

13. Éolienne ou générateur qui comporte un moyeu (561) selon la revendication 12.

14. Parc éolien qui comporte une éolienne selon la revendication 13.
